# EUROPEAN PATENT APPLICATION

(11) **EP 4 294 020 A1**
(43) Date of publication of application: **20.12.2023**
(21) Application number: 23161167.4
(22) Date of filing: 10.03.2023
(51) Int. Cl.: H04N 21/2187, H04N 21/2343, H04N 21/2665, H04N 21/4223, H04N 21/431, H04N 21/4402, H04N 21/462, H04N 21/485, H04N 5/262, H04N 5/45

(54) **INPUT AND OUTPUT DEVICE FOR MULTIPLE FORMATS OF VIDEO CLASS**

(30) Priority: 14.06.2022 TW 111121977
(71) Applicant: Magic Control Technology Corporation, New Taipei City 236658 (TW)
(72) Inventor: LIU, Pei-Chung, 235 New Taipei City (TW)
(74) Representative: TBK

(57) **Abstract**

Provided is an input and output device for multiple formats of video class, which receives images from at least one camera connected thereto and outputs the images to a computing device connected thereto. The input and output device for multiple formats of video class includes a USB host control unit and an image processing unit. The USB host control unit receives the images from the at least one camera. The image processing unit is connected to the USB host control unit to receive the images and perform an image merge processing on the images to merge the images into a merged image. The image merge processing includes at least one merged image display mode. The image processing unit transmits the merged image to the computing device according to a selected merged image display mode.

## Description

### CROSS-REFERENCE TO RELATED APPLICATION

This application claims the priority of Taiwanese patent application No. 111121977, filed on June 14, 2022, which is incorporated herewith by reference.

### BACKGROUND OF THE INVENTION

### 1. Field of the Invention

The present invention relates to an input and output device for multiple formats of video class, in particular to an input and output device for multiple formats of video class, which is capable of merging the images of a plurality of cameras into a merged image and then outputting the merged image.

### 2. The Prior Arts

The increasing online conferences usually require displaying images of multiple cameras simultaneously; however, general display methods may be limited by the position and distance of the images, thereby resulting in unclear images or needing to switch the screens for separately displaying images.

Therefore, it is necessary to provide a device that can efficiently and simultaneously process images of a plurality of cameras, so as to enable to clearly display images of various positions and distances.

### SUMMARY OF THE INVENTION

In order to effectively solve the above problems, the present invention provides an input and output device for multiple formats of video class, which receives images from at least one camera connected thereto and outputs the images to a computing device connected thereto. The input and output device for multiple formats of video class comprise a USB host control unit and an image processing unit. The USB host control unit receives the images from the at least one camera. The image processing unit is connected to the USB host control unit to receive and perform an image merge processing on the images to merge the images into a merged image. The image merge processing includes at least one merged image display mode. The image processing unit transmits the merged image to the computing device according to a selected merged image display mode.

According to an embodiment of the present invention, the input and output device for multiple formats of video class further comprises at least two USB ports and a USB device control unit. The at least two USB ports are connected to the at least one camera and the computing device, respectively, wherein the USB host control unit is connected to at least one USB port of the at least two USB ports connected to the at least one camera to receive the images from the at least one camera. The USB device control unit is connected to the USB host control unit and at least one USB port of the at least two USB ports connected to the computing device, and the USB device control unit receives the merged image from the image processing unit to transmit the merged image to the computing device.

According to an embodiment of the present invention, the input and output device for multiple formats of video class further comprises at least one USB port and a wireless module. The at least one USB port is connected to the at least one camera, wherein the USB host control unit is connected to the at least one USB port to receive the images from the at least one camera. The wireless module is connected to the USB host control unit and wirelessly connected to the computing device, and receives the merged image from the image processing unit to wirelessly transmit the merged image to the computing device.

According to an embodiment of the present invention, the image processing unit comprises a processor, a memory, and a storage unit, wherein the processor uses a program stored in the storage unit to execute the at least one merged image display mode, and the memory is used for storing the merged image.

According to an embodiment of the present invention, the input and output device for multiple formats of video class further comprises an image input control unit connected to the image processing unit, receiving the images from the at least one camera, and converting an image format into another image format supported by the image processing unit to allow the image processing unit to receive the images and perform an image merge processing on the images.

According to an embodiment of the present invention, the multiple formats of video class comprise HDMI, LVDS, DP, and AHD.

Through the input and output device for multiple formats of video class of the present invention, the images of a plurality of cameras can be processed efficiently and simultaneously, so as to conduct a web conference, and the images of various positions and distances can be clearly displayed.

### BRIEF DESCRIPTION OF THE DRAWINGS

FIG 1 is a schematic diagram of an input and output device for multiple formats of video class according to an embodiment of the present invention;
FIG 2 is a schematic diagram of an input and output device for multiple formats of video class according to another embodiment of the present invention;
FIG 3 is a schematic diagram of an input and output device for multiple formats of video class according to yet another embodiment of the present invention; and
FIG 4 is a schematic diagram of an input and output device for multiple formats of video class according to still another embodiment of the present invention.

### DETAILED DESCRIPTION OF THE PREFERRED EMBODIMENT

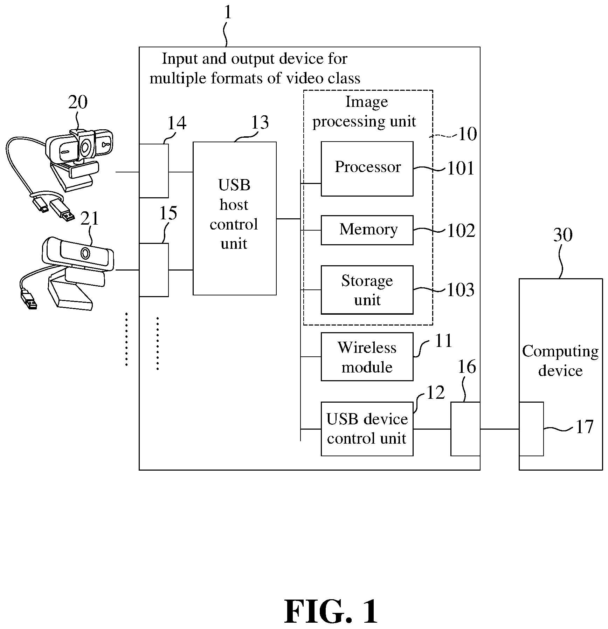

Please refer to FIGs. 1-3, which are schematic diagrams of an input and output device for multiple formats of video class according to different embodiments of the present invention. As shown in FIG 1, the present invention provides an input and output device 1 for multiple formats of video class, which receives images input from cameras 20 and 21 connected thereto, and outputs the images to a computing device 30 connected thereto. These embodiments are especially used for the images of the USB video class. The computing device 30 can be a desktop computer, a laptop, or various mobile devices. The input and output device 1 for multiple formats of video class includes a USB host control unit 13 and an image processing unit 10. The USB host control unit 13 receives the images from the cameras 20 and 21. The image processing unit 10 is connected to the USB host control unit 13, and can receive the images and perform an image merge processing on the images to merge the images into a merged image. The image merge processing includes at least one merged image display mode, such as a picture-in-picture mode or a picture-by-picture mode. The image processing unit 10 transmits the merged image to the computing device 30 according to a selected merged image display mode.

In the embodiment of FIG 1, the input and output device 1 for multiple formats of video class includes USB ports 14, 15, 16 and a USB device control unit 12. The USB ports 14, 15 are connected to the cameras 20, 21, respectively, and the USB port 16 is connected to a USB port 17 of the computing device 30 through a USB cable. The USB host control unit 13 is connected to the USB ports 14, 15 to receive the images from the cameras 20, 21. The USB device control unit 12 is connected to the USB host control unit 13 and the USB port 16, and receives the merged image from the image processing unit 10 to transmit the merged image to the computing device 30.

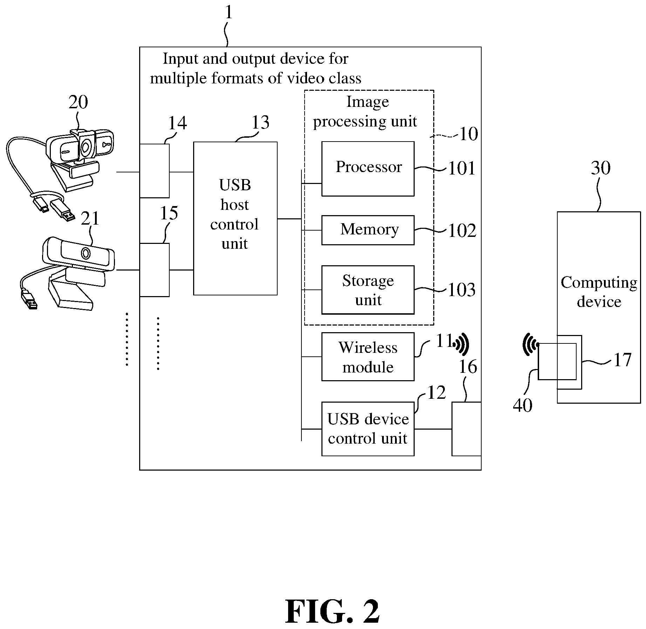

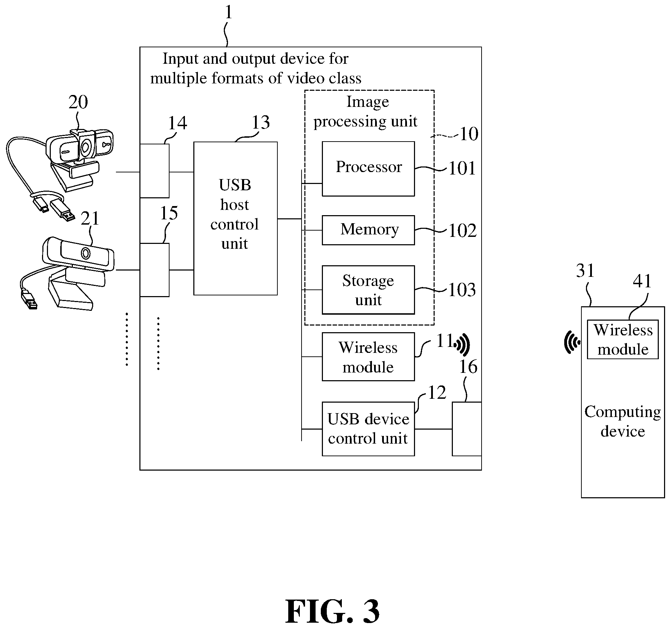

In addition, the input and output device 1 for multiple formats of video class includes a wireless module 11, which is connected to the USB host control unit 13 and can be used for wirelessly connecting a wireless device 40 inserted in the USB port 17 of the computing device 30, as shown in FIG 2. The merged image received from the image processing unit 10 is wirelessly transmitted to the computing device 30. In the embodiment of FIG 3, the computing device 31, like the computing device 30, can be a desktop computer, a laptop, or various mobile devices. The wireless module 11 can be wirelessly connected to a wireless module 41 of the computing device 31 to wirelessly transmit the merged image to the computing device 31.

In the embodiments of FIGs. 1-3, the image processing unit 10 includes a processor 101, a memory 102, and a storage unit 103. The processor 101 uses a program stored in the storage unit 103 to execute the at least one merged image display mode, and the memory 102 is used for storing the merged image. The at least one merged image display mode includes arranging the images of the cameras 20 and 21 in different ways to merge the images, such as arranging the images of the cameras 20 and 21 side by side, partially overlapping, cropping, zooming in and zooming out. Similarly, the above processing can also be performed when two or more cameras are simultaneously connected.

According to the embodiment of the present invention, the USB host control unit 13 may include or be implemented as a PCIe Gen 2 to Universal Serial Bus 3.0 host controller, such as Etron Technology, Inc.'s product Ej 198.

According to the embodiment of the present invention, the image processing unit 10 may include or be implemented as an image processor, such as Amlogic, Inc.'s product S905x2 or Rockchip Electronics Co., Ltd.'s product RK3588. Further, the image processing unit 10 may be integrated with the USB host control unit.

According to the embodiment of the present invention, the wireless module 11 may include or be implemented as, for example, AMPAK Technology Inc.'s product AP6398S.

According to the embodiment of the present invention, the USB device control unit 12 may include or be implemented as, for example, SONIX Technology Co., Ltd.'s product SN9C292A. Further, the image processing unit 10 may be integrated with the USB device control unit.

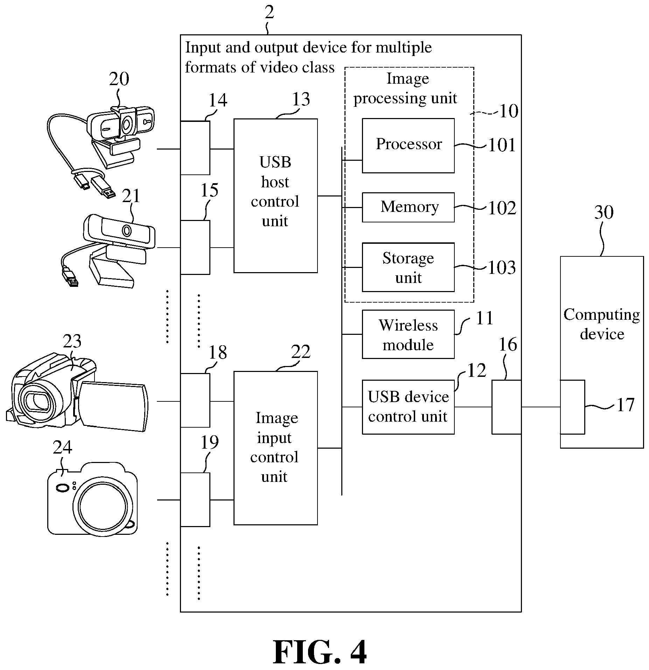

Please refer to FIG 4. The present invention provides an input and output device 2 for multiple formats of video class. The supported formats of video class include HDMI, LVDS, DP, AHD, etc., used in cameras or video recorders, and the features same as those of the input and output device 1 for multiple formats of video class in FIG 1 will not be repeated here. The difference from the input and output device 1 is that the input and output device 2 additionally receives the images input from a video recorder 23 and a handheld camera 24 connected thereto through video connection ports 18, 19. The input and output device 2 for multiple formats of video class can be used for HDMI, LVDS, DP, AHD and other image formats used in cameras or video recorders, and output the images to a computing device 30 connected thereto. The computing device 30 can be a desktop computer, a laptop, or various mobile devices. The input and output device 2 for multiple formats of video class further includes an image input control unit 22. The image input control unit 22 receives the images from the video recorder 23 and the handheld camera 24. The image input control unit 22 not only receives image signals according to different image protocols, but also is used for converting an image format into another image format supported by the image processing unit 10. The image processing unit 10 is connected to the image input control unit 22, and can receive the images and perform an image merge processing on the images to merge the images into a merged image. The image merge processing includes at least one merged image display mode, such as a picture-in-picture mode or a picture-by-picture mode. The image processing unit 10 transmits the merged image to the computing device 30 according to a selected merged image display mode.

According to the embodiment of the present invention, the image input control unit 22 may include or be implemented as, for example, Toshiba Electronic Device & Storage Corporation's product TC9590XBG

Through the input and output device for multiple formats of video class of the present invention, the images of a plurality of cameras can be processed efficiently and simultaneously, so as to conduct a web conference, and the images of various positions and distances can be clearly displayed.

The present invention is not limited to the aforementioned embodiments, and it is obvious to those skilled in the art that various modifications and changes can be made to the present invention without departing from the spirit or scope of the present invention.

Accordingly, the present invention covers modifications and variations made to the present invention or to fall within the scope of the appended claims and the equivalents.

Provided is an input and output device for multiple formats of video class, which receives images from at least one camera connected thereto and outputs the images to a computing device connected thereto. The input and output device for multiple formats of video class includes a USB host control unit and an image processing unit. The USB host control unit receives the images from the at least one camera. The image processing unit is connected to the USB host control unit to receive the images and perform an image merge processing on the images to merge the images into a merged image. The image merge processing includes at least one merged image display mode. The image processing unit transmits the merged image to the computing device according to a selected merged image display mode.

## Claims

1. An input and output device for multiple formats of video class, which receives images from at least one camera connected thereto and outputs the images to a computing device connected thereto, the input and output device for multiple formats of video class comprising:
a USB host control unit receiving the images from the at least one camera; and
an image processing unit connected to the USB host control unit and receiving the images and performing an image merge processing on the images to merge the images into a merged image,
wherein the image merge processing includes at least one merged image display mode, the image processing unit transmits the merged image to the computing device according to a selected merged image display mode.

2. The input and output device for multiple formats of video class according to claim 1, further comprising:
at least two USB ports connected to the at least one camera and the computing device, respectively, wherein the USB host control unit is connected to at least one USB port of the at least two USB ports connected to the at least one camera to receive the images from the at least one camera; and
a USB device control unit connected to the USB host control unit and at least one USB port of the at least two USB ports connected to the computing device, and receiving the merged image from the image processing unit to transmit the merged image to the computing device.

3. The input and output device for multiple formats of video class according to claim 1, further comprising:
at least one USB port connected to the at least one camera, wherein the USB host control unit is connected to the at least one USB port to receive the images from the at least one camera; and
a wireless module connected to the USB host control unit and wirelessly connected to the computing device, and receiving the merged image from the image processing unit to wirelessly transmit the merged image to the computing device.

4. The input and output device for multiple formats of video class according to claim 1, wherein the image processing unit comprises a processor, a memory, and a storage unit, wherein the processor uses a program stored in the storage unit to execute the at least one merged image display mode, and the memory is used for storing the merged image.

5. The input and output device for multiple formats of video class according to claim 1, further comprising: an image input control unit connected to the image processing unit, receiving the images from the at least one camera, and converting an image format into another image format supported by the image processing unit to allow the image processing unit to receive the images and perform an image merge processing on the images.

6. The input and output device for multiple formats of video class according to claim 5, wherein the multiple formats of video class comprise HDMI, LVDS, DP, and AHD.

7. A method of inputting and outputting multiple formats of video class for receiving images from at least one camera and outputting the images to a computing device, the method comprising:
receiving the images from the at least one camera using a USB host control unit; and
connecting an image processing unit to the USB host control unit to receive the images and perform an image merge processing on the images to merge the images into a merged image,
wherein the image merge processing includes at least one merged image display mode, the image processing unit transmits the merged image to the computing device according to a selected merged image display mode.

8. The method according to claim 7, further comprising:
connecting at least two USB ports to the at least one camera and the computing device, respectively, wherein the USB host control unit is connected to at least one USB port of the at least two USB ports connected to the at least one camera to receive the images from the at least one camera; and
connecting a USB device control unit to the USB host control unit and at least one USB port of the at least two USB ports connected to the computing device, and receiving the merged image from the image processing unit to transmit the merged image to the computing device.

9. The method according to claim 7, further comprising:
connecting at least one USB port to the at least one camera, wherein the USB host control unit is connected to the at least one USB port to receive the images from the at least one camera; and
connecting a wireless module to the USB host control unit and wirelessly connecting the wireless module to the computing device, and receiving the merged image from the image processing unit to wirelessly transmit the merged image to the computing device.

10. The method according to claim 7, wherein the image processing unit comprises a processor, a memory, and a storage unit, wherein the processor uses a program stored in the storage unit to execute the at least one merged image display mode, and the memory is used for storing the merged image.

11. The method according to claim 7, further comprising:
connecting an image input control unit to the image processing unit, receiving the images from the at least one camera, and converting an image format into another image format supported by the image processing unit to allow the image processing unit to receive the images and perform an image merge processing on the images.

12. The method according to claim 11, wherein the multiple formats of video class comprise HDMI, LVDS, DP, and AHD.
